# DEMANDE DE BREVET EUROPEEN

(11) **EP 4 411 211 A1**
(43) Date de publication de la demande: **07.08.2024**
(21) Numéro de dépôt: 23154775.3
(22) Date de dépôt: 02.02.2023
(51) Int. Cl.: F21V 5/00, F21V 5/04, G02B 1/04

(54) **DISPOSITIF D'ECLAIRAGE**

(71) Demandeur: Steris, 33185 Le Haillan (FR)
(72) Inventeur: DENUDT, Thomas, 33600 Pessac (FR)
(74) Mandataire: Ernest Gutmann - Yves Plasseraud S.A.S.

(57) **Abrégé**

Le présent document concerne un dispositif d'éclairage (1) comportant :
- une première source lumineuse associée à un premier collimateur (9), aptes à générer un premier faisceau lumineux formant une première tache lumineuse pleine circulaire à une distance focale déterminée,
- une deuxième source lumineuse associée à un deuxième collimateur (10), aptes à générer un deuxième faisceau lumineux formant une deuxième tache lumineuse annulaire à ladite distance focale, la deuxième tache comportant une zone d'ombre centrale, la première tache lumineuse étant située dans ladite zone d'ombre de la seconde tache,
- des moyens de commande de la première source lumineuse et/ou de la deuxième source lumineuse.

## Description

### Domaine de la divulgation

L'invention concerne un dispositif d'éclairage médical, notamment pour un bloc opératoire.

### Etat de la technique

Un tel dispositif d'éclairage comporte classiquement au moins un bras articulé dont une extrémité est fixe et dont une extrémité opposée mobile est équipée d'un module d'éclairage.

Le module d'éclairage peut être déplacé par un chirurgien, de manière à orienter le faisceau lumineux vers une zone à éclairer d'un patient.

Un tel dispositif est notamment connu du document EP 3 081 854.

Celui-ci comporte classiquement un corps creux comportant un rebord et une paroi de fond concave dans lequel sont logés et fixés des modules d'éclairage. Le corps est équipé d'une poignée et est monté sur au moins un bras articulé. Le rebord du corps délimite une ouverture refermée par un capot ou écran de protection transparent.

Chaque module d'éclairage comporte classiquement au moins une source lumineuse associée à un collimateur, aptes à générer un faisceau lumineux formant une tache lumineuse à une distance focale.

Plusieurs techniques sont connues de l'art antérieur pour faire varier la taille de la tache lumineuse.

Le présent document propose une alternative aux techniques existantes, qui est simple, peu onéreuse et permet de faire varier efficacement la dimension de la zone éclairée.

### Exposé de la divulgation

A cet effet, le présent document propose un dispositif d'éclairage comportant :
- une première source lumineuse associée à un premier collimateur, aptes à générer un premier faisceau lumineux formant une première tache lumineuse pleine circulaire à une distance focale déterminée,
- une deuxième source lumineuse associée à un deuxième collimateur, aptes à générer un deuxième faisceau lumineux formant une deuxième tache lumineuse annulaire à ladite distance focale déterminée, la deuxième tache comportant une zone d'ombre centrale, la première tache lumineuse étant située dans ladite zone d'ombre de la seconde tache,
- des moyens de commande de la première source lumineuse et/ou de la deuxième source lumineuse.

Il est ainsi possible de faire varier la forme et la dimension de la tache lumineuse, soit en allumant ou en éteignant les premières et deuxième sources lumineuses, soit en modulant l'intensité lumineuse des premiers et second faisceaux lumineux. L'allumage simultané des deux sources lumineuses permet d'obtenir une tache lumineuse pleine de grande dimension tandis que l'allumage de la première source lumineuse seulement permet d'obtenir une tache lumineuse de plus faible dimension, par exemple.

La première tache peut présenter un premier diamètre, la deuxième tache peut présenter un deuxième diamètre et la zone d'ombre peut présenter un troisième diamètre, le deuxième diamètre étant supérieur au premier diamètre, le premier diamètre étant au moins égal au troisième diamètre et inférieur au deuxième diamètre.

Chaque faisceau lumineux peut être orienté selon un axe. On définit le plan focal d'un collimateur comme le plan perpendiculaire à l'axe et situé à la distance focale du collimateur correspondant. On définit par point focal le point situé sur l'axe du faisceau lumineux et situé à la distance focale du collimateur correspondant.

La distance focale est par exemple comprise entre 0,8 et 1,5 mètre, par exemple égale à 1 mètre.

La tache est la représentation du faisceau lumineux à la distance focale. Cette tache présente une intensité lumineuse qui varie d'une zone à l'autre de la tache. On appelle carte d'éclairement le diagramme illustrant l'évolution de l'intensité lumineuse reçue à la distance focale en fonction de la position selon un axe perpendiculaire à l'axe du faisceau lumineux, c'est-à-dire selon une direction radiale.

La première tache peut présenter une carte d'éclairement en forme de gaussienne, c'est-à-dire suivant une loi de distribution normale, centrée sur l'axe du premier faisceau.

La seconde tache peut également présenter une carte d'éclairement en forme de gaussienne, centrée sur l'axe du second faisceau et plus étalée que la carte d'éclairement de la première tache. La seconde tache peut présenter une zone d'ombre, c'est-à-dire une zone de réduction de l'intensité lumineuse, au centre. Cette réduction de l'intensité lumineuse peut être progressive et passer par un minimum local au centre de la tache, c'est-à-dire le long de l'axe du second faisceau lumineux, au niveau du point focal.

On définit le diamètre de la tache comme étant le diamètre de la zone pour laquelle l'intensité lumineuse en périphérie de la tache est supérieur ou égal à 10 pourcents de l'intensité maximale de la tache correspondante.

On définit par diamètre de la zone d'ombre le diamètre de la zone centrale de la tache pour laquelle l'intensité lumineuse est réduite. Le diamètre de la zone d'ombre est ainsi défini comme la distance entre deux maximums locaux ou sommets de la carte d'éclairement, situés de part et d'autre de la zone centrale de la carte d'éclairement. Ladite zone centrale est la zone proche de la position de l'axe du faisceau.

Le centre de la première tache peut coïncider avec le centre de la seconde tache. Entre d'autres termes, le point focal du premier faisceau lumineux peut coïncider avec le point focal du deuxième faisceau lumineux.

Le premier collimateur pouvant être décalé latéralement par rapport au second collimateur, les axes des premier et deuxième faisceaux lumineux ne sont pas parfaitement parallèles. Plus le décalage entre les collimateurs est important, plus l'angle entre lesdites axes est important. Les premier et deuxième collimateurs peuvent être situés le long d'une surface concave, tournée vers le point focal. Ladite surface concave peut être courbe, par exemple une forme de portion de sphère ou une forme de parabole.

Chaque collimateur peut comporter une partie principale de forme générale conique comportant un évidement central s'étendant selon l'axe de la partie principale, ledit évidement comportant une extrémité d'entrée située en regard de la source lumineuse correspondant et une extrémité de sortie opposée, la partie principale conique s'élargissant de l'extrémité d'entrée vers l'extrémité de sortie, une lentille étant formée dans ledit évidement.

L'axe de la partie principale du collimateur peut correspondre à l'axe du faisceau lumineux correspondant.

Ladite lentille peut comporter une face d'entrée, tournée vers l'extrémité d'entrée, et une face de sortie, tournée vers l'extrémité de sortie, la face d'entrée et/ou la face de sortie étant formée par une surface de révolution balayée par la rotation d'une courbe autour de l'axe de la partie principale, ladite courbe étant convexe et comportant une première extrémité, radialement interne, et une seconde extrémité, radialement externe.

La première extrémité peut être située sur l'axe de la partie principale. La seconde extrémité peut être rattachée au bord de l'évidement central.

La seconde extrémité de la courbe définissant face d'entrée peut être décalée axialement vers l'extrémité d'entrée par rapport à la première extrémité de ladite courbe.

La convexité de ladite courbe peut être orientée vers l'extrémité d'entrée de l'évidement. Ladite courbe peut être représentée par une équation mathématique polynomiale dans un repère formé par l'axe de la partie principale et l'axe orthogonal radial. Ladite courbe peut ainsi être une portion de parabole, dans le cas d'un polynôme de degré 2.

Les termes radial, axial et circonférentiel sont définis par rapport à l'axe de la partie principale conique.

La première extrémité de la courbe définissant la face de sortie peut être décalée axialement vers l'extrémité de sortie par rapport à la seconde extrémité de ladite courbe. La convexité de ladite courbe peut être orientée vers l'extrémité de sortie de l'évidement. Ladite courbe peut être représentée par une équation mathématique polynomiale dans un repère formé par l'axe de la partie principale et l'axe orthogonal radial. Ladite courbe peut ainsi être une portion de parabole, dans le cas d'un polynôme de degré 2.

Entre la lentille et l'extrémité d'entrée, l'évidement peut être délimité par une surface de révolution d'entrée balayée par la rotation d'une courbe autour de l'axe de la partie principale, ladite courbe comportant une première extrémité, formant l'extrémité d'entrée, et une seconde extrémité, rattachée à la lentille.

Dans le cas du premier collimateur, la courbe définissant la surface de révolution d'entrée peut être une courbe comportant un point d'inflexion.

Dans le cas du deuxième collimateur, la courbe définissant la surface de révolution d'entrée peut être une droite ou peut être convexe, la convexité étant tournée vers l'axe du premier collimateur.

La dimension radiale de l'évidement du premier collimateur et/ou du deuxième collimateur peut se rétrécir de l'extrémité d'entrée vers la lentille.

Entre la lentille et l'extrémité de sortie, l'évidement peut être délimité par une surface de révolution de sortie formée par un cylindre ou un cône.

La surface de révolution de sortie de chaque collimateur peut être un cylindre, un cône ou surface convexe dont la convexité est tournée vers l'axe du collimateur ou du faisceau lumineux correspondant.

La lentille peut être réalisée de façon monobloc avec la partie principale du collimateur correspondant.

La partie principale et la lentille peuvent être réalisées en PMMA (poly méthacrylate de méthyle acrylique), en PC (polycarbonate) ou en silicone.

Le dispositif d'éclairage peut comporter au moins un groupe de premier collimateurs associés à des premières sources lumineuses et au moins un groupe de deuxièmes collimateurs associés à des secondes sources lumineuses.

Le dispositif d'éclairage peut comporter un corps comportant une paroi de fond concave et un rebord délimitant un volume interne, les collimateurs et les sources lumineuses étant montés sur la paroi de fond du corps.

Ladite paroi de fond peut être courbe, par exemple une forme de portion de sphère ou une forme de parabole.

Le rebord du corps peut délimiter une ouverture recouverte par un capot apte à permettre, au moins en partie, le passage des faisceaux lumineux.

Le dispositif peut comporter plusieurs modules d'éclairage montés à l'intérieur du corps. Chaque module peut comporter un bloc optique et une carte électronique sur laquelle sont montées plusieurs sources lumineuses, agencées en regard de collimateurs du bloc optique.

La ou les sources lumineuses peuvent être des diodes électroluminescentes.

Les cartes électroniques des modules peuvent permettre de gérer l'allumage des différentes sources lumineuses.

Le dispositif peut également comporter des moyens de commande aptes notamment à commander l'allumage des différents modules et peut comprendre à cet effet une carte électronique de commande. Ladite carte électronique de commande peut être montée et fixée dans le corps.

Le corps peut être équipé d'une poignée. La poignée peut comporter une partie amovible.

La partie amovible peut ainsi être retirée de façon à faciliter le remplacement et/ou la stérilisation de ladite poignée.

Le dispositif d'éclairage peut être un dispositif d'éclairage médical. Le dispositif d'éclairage peut être une lampe scialytique, notamment pour un bloc opératoire.

Le terme "bloc opératoire" inclut également les cas où le dispositif d'éclairage est adapté à un fauteuil dentaire ou à un domaine d'activité similaire : salles d'examen, salles d'urgence, salles de plâtre, unités de soins intensifs, chambres de suture, chambres à induction, néonatologie, pédiatrie, maternité,....

Le dispositif peut comporter une embase, par exemple une embase mobile équipée de roues, à partir de laquelle s'étend un mat, un bras étant articulé sur le mat, par exemple à l'extrémité supérieure du mat.

Une tête ou coupole d'éclairage comportant le corps peut être montée sur l'extrémité libre du bras. Le bras articulé peut comporter plusieurs éléments reliés les uns aux autres par des articulations permettant de déplacer manuellement la tête d'éclairage en tout point de l'espace et d'orienter cette tête dans toutes les directions.

En variante, le bras articulé peut être relié à un point fixe d'un mur ou d'un plafond, par exemple, et non à un mat solidaire d'une embase.

### Brève description des figures

D'autres caractéristiques et avantages de la présente divulgation apparaîtront dans la description détaillée suivante, se référant aux dessins annexés dans lesquels :
[Fig. 1] est une vue en perspective d'un dispositif d'éclairage selon une forme de réalisation du présent document,
[Fig. 2] est une vue en perspective d'une partie du dispositif,
[Fig. 3] est une vue en perspective du premier collimateur, sur laquelle est représenté une section centrale dudit collimateur,
[Fig. 4] est une vue en perspective du deuxième collimateur, sur laquelle est représenté une section centrale dudit collimateur,
[Fig. 5] est une vue carte d'éclairement d'une tache lumineuse générée par le premier faisceau lumineux,
[Fig. 6] est une vue carte d'éclairement d'une tache lumineuse générée par le deuxième faisceau lumineux,
[Fig. 7] est une vue carte d'éclairement d'une tache lumineuse générée par le premier faisceau lumineux et le deuxième faisceau lumineux.

### Description détaillée de la divulgation

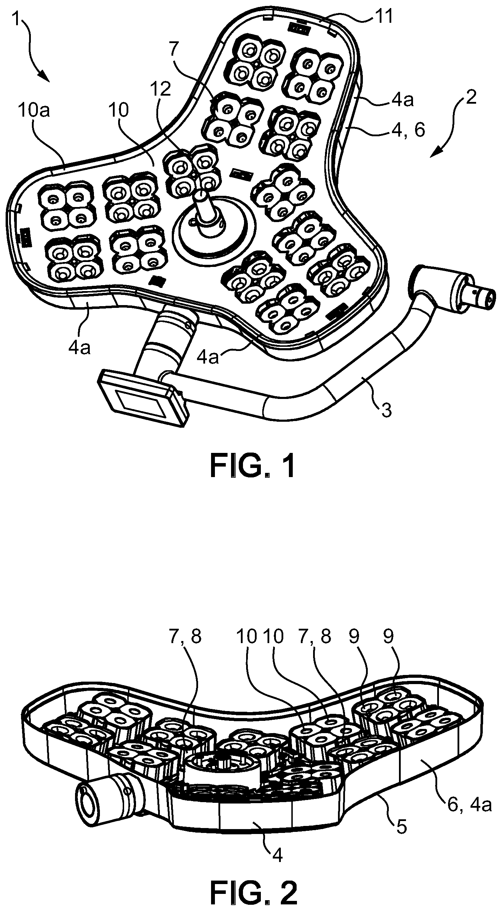

Les figures 1 à 4 représentent un dispositif d'éclairage 1 pour bloc opératoire, selon une forme de réalisation du présent document.

Celui-ci comporte une tête ou coupole d'éclairage 2, qui est montée sur l'extrémité libre d'un bras articulé 3.

Le bras articulé 3 est par exemple destiné à être relié directement ou indirectement à un point fixe d'un mur ou d'un plafond.

La tête d'éclairage 2 comporte un corps 4 creux comportant une paroi de fond 5 et un rebord 6 délimitant un volume interne comportant une ouverture. La paroi de fond 5 est concave et est courbe, par exemple en forme de portion de sphère ou en forme de parabole.

Le corps 4 comporte une partie centrale à partir de laquelle s'étendent trois lobes 4a. Par ailleurs, des modules d'éclairage 7 sont montés à l'intérieur du corps 4, sur la surface de fond 5 concave. Chaque module 7 comporte un bloc optique 8 et une carte électronique sur laquelle sont montées quatre sources lumineuses, agencées en regard de collimateurs 9, 10 du bloc optique 8 (figure 2).

Le bloc optique 8 et la carte électronique sont fixés au corps 4, par exemple par l'intermédiaire de vis.

Le dispositif 1 comporte également des moyens de commande aptes notamment à commander l'allumage des différents modules 7.

L'ouverture du corps 4 est recouverte d'un capot 10 ou écran transparent de protection. Un joint d'étanchéité 11 est monté entre le rebord 6 et la périphérie du capot 10.

Le capot 10 comporte une partie centrale et des lobes 10a s'étendant depuis la partie centrale. Les formes et dimensions des lobes 10a du capot 10 correspondent à celles des lobes 4a du corps 4.

Une poignée 12 est par ailleurs montée sur le corps 4. Ladite poignée 12 peut comporter une partie amovible, non représentée.

En particulier, le corps 4 peut être équipé de deux types de modules 7, à savoir un premier type comportant des premiers collimateurs 9, et un second type comportant des seconds collimateurs 10.

Chaque lobe 4a comporte deux modules 7 du premier type et deux modules 7 du second type, agencés en quinconce.

Un module du premier type et un module du second type sont en outre montés à la base des lobes 4a, c'est-à-dire entre les lobes 4a et la zone centrale du corps, à proximité de la poignée 12.

Sur un même diamètre d'implantation, c'est-à-dire à une même distance de la zone centrale du corps, le nombre de modules du premier type est de préférence égal au nombre de modules du second type.

Bien entendu, la répartition des modules 7 peut être différente et fonction des applications.

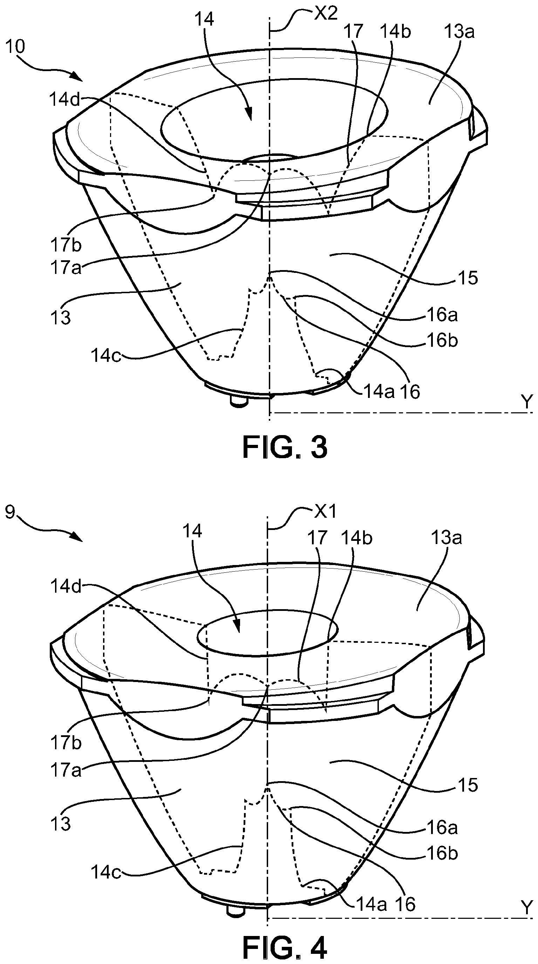

On s'intéressera dans ce qui suit à la structure des premiers collimateurs 9 (figure 3) et des seconds collimateurs 10 (figure 4). On notera que, sur ces figures, sont représentées la structure en perspective de chaque collimateur ainsi qu'une section centrale, représentée en traits pointillés.

Chaque collimateur 9, 10 comporte une partie principale 13 de forme générale conique comportant un évidement central 14 s'étendant selon l'axe X1, X2 de la partie principale 13, ledit évidement 14 comportant une extrémité d'entrée 14a située en regard de la source lumineuse correspondant (en bas sur les figures) et une extrémité de sortie 14b opposée, la partie principale conique 13 s'élargissant de l'extrémité d'entrée vers l'extrémité de sortie. Une lentille 15 est formée dans ledit évidement 14.

La lentille 15 est réalisée de façon monobloc avec la partie principale 13 du collimateur correspondant 9, 10. En variante, ladite lentille 15 peut être formée par un élément distinct de la partie principale 13.

La partie principale 13 et la lentille 15 peuvent être réalisées en PMMA (poly méthacrylate de méthyle acrylique), en PC (polycarbonate) ou en silicone.

La lentille 15 comporte une face d'entrée 16, tournée vers l'extrémité d'entrée 14a, et une face de sortie 17, tournée vers l'extrémité de sortie, la face d'entrée 16 et/ou la face de sortie 17 étant formée par une surface de révolution balayée par la rotation d'une courbe autour de l'axe X1, X2 de la partie principale 13, ladite courbe étant convexe et comportant une première extrémité 16a, 17a, radialement interne, et une seconde extrémité 17a, 17b, radialement externe.

La première extrémité 16a, 17a est située sur l'axe X1, X2 de la partie principale 13. La seconde extrémité 16b, 17b est rattachée au bord de l'évidement central 14.

La seconde extrémité 16b de la courbe définissant face d'entrée 16 est décalée axialement vers l'extrémité d'entrée 14a par rapport à la première extrémité 16a de ladite courbe.

La convexité de ladite courbe est orientée vers l'extrémité d'entrée 14a de l'évidement 14. Ladite courbe peut être représentée par une équation mathématique polynomiale dans un repère formé par l'axe X1, X2 de la partie principale 13 et l'axe orthogonal radial Y. Ladite courbe peut ainsi être une portion de parabole, dans le cas d'un polynôme de degré 2.

Les termes radial, axial et circonférentiel sont définis par rapport à l'axe X1, X2 de la partie principale conique 13.

La première extrémité 17a de la courbe définissant la face de sortie 17 peut être décalée axialement vers l'extrémité de sortie 14b par rapport à la seconde extrémité 17b de ladite courbe. La convexité de ladite courbe peut être orientée vers l'extrémité de sortie 14b de l'évidement 14. Comme précédemment, ladite courbe peut être représentée par une équation mathématique polynomiale dans un repère formé par l'axe de la partie X1, X2 principale 13 et l'axe orthogonal radial Y. Ladite courbe peut ainsi être une portion de parabole, dans le cas d'un polynôme de degré 2.

Entre la lentille 15 et l'extrémité d'entrée 14a, l'évidement 14 peut être délimité par une surface de révolution d'entrée 14c balayée par la rotation d'une courbe autour de l'axe X1, X2 de la partie principale 13, ladite courbe comportant une première extrémité, formant l'extrémité d'entrée 14a, et une seconde extrémité, rattachée à la lentille, en particulier à l'extrémité 16b.

Dans le cas du premier collimateur 10, la courbe définissant la surface de révolution d'entrée 14c peut être une courbe comportant un point d'inflexion.

Dans le cas du deuxième collimateur 9, la courbe définissant la surface de révolution d'entrée 14c peut être une droite ou peut être convexe, la convexité étant tournée vers l'axe X1 du premier collimateur 9.

La dimension radiale de l'évidement 14 du premier collimateur 9 et/ou du deuxième collimateur 10 peut se rétrécir de l'extrémité d'entrée 14a vers la lentille 15.

Entre la lentille 15 et l'extrémité de sortie 14b, l'évidement 14 peut être délimité par une surface de révolution de sortie 14d formée par une surface convexe, un cylindre ou un cône.

La surface d'extrémité de sortie 13a de la partie principale 13 du collimateur peut comporter une texture formée par des stries orientées radialement et/ou un quadrillage. Une telle texture permet d'améliorer la diffusion de la lumière.

Les collimateurs 9, 10 peuvent être réalisés de façon séparée les uns des autres ou de de façon monobloc, au sein d'un même bloc optique 8.

Les axes X1, X2 des collimateurs 9, 10 ou des faisceaux desdits collimateurs 9, 10 d'un même module 7 ne sont pas parallèles. En effet, lesdits axes s'intersectent tous au niveau du point focal.

Chaque premier collimateur 9 est associé à une première source lumineuse de façon à pouvoir générer un premier faisceau lumineux formant une première tache lumineuse pleine circulaire à une distance focale déterminée.

Par ailleurs, chaque deuxième collimateur 10 est associé à une deuxième source lumineuse de façon à pouvoir générer un deuxième faisceau lumineux formant une deuxième tache lumineuse annulaire à ladite distance focale, la deuxième tache comportant une zone d'ombre centrale.

La première tache lumineuse de chaque premier collimateur 9 de chaque module d'éclairage 7 est située dans ladite zone d'ombre de la seconde tache de chaque deuxième collimateur 10 du module d'éclairage 7 correspondant.

Chaque première tache présente un premier diamètre D1, chaque deuxième tache présentant un deuxième diamètre D2. Chaque zone d'ombre présente un troisième diamètre D'2, le deuxième diamètre étant supérieur au premier diamètre D1, le premier diamètre D1 étant au moins égal au troisième diamètre D'2 et inférieur au deuxième diamètre D2.

Chaque faisceau lumineux est orienté selon l'axe X1 ou X2 correspondant. On définit le plan focal d'un collimateur comme le plan perpendiculaire à l'axe X1 ou X2 et situé à la distance focale du collimateur 9, 10 correspondant.

On définit par point focal le point situé sur l'axe X1, X2 du faisceau lumineux et situé à la distance focale du collimateur 9, 10 correspondant.

La distance focale est par exemple comprise entre 0,8 et 1,5 mètre, par exemple égale à 1 mètre.

La tache est la représentation du faisceau lumineux à la distance focale. Cette tache présente une intensité lumineuse qui varie d'une zone à l'autre de la tache. On appelle carte d'éclairement le diagramme illustrant l'évolution de l'intensité lumineuse I reçue à ladite distance en fonction de la position selon un axe Y perpendiculaire à l'axe X1, X2 du faisceau lumineux, c'est-à-dire selon une direction radiale.

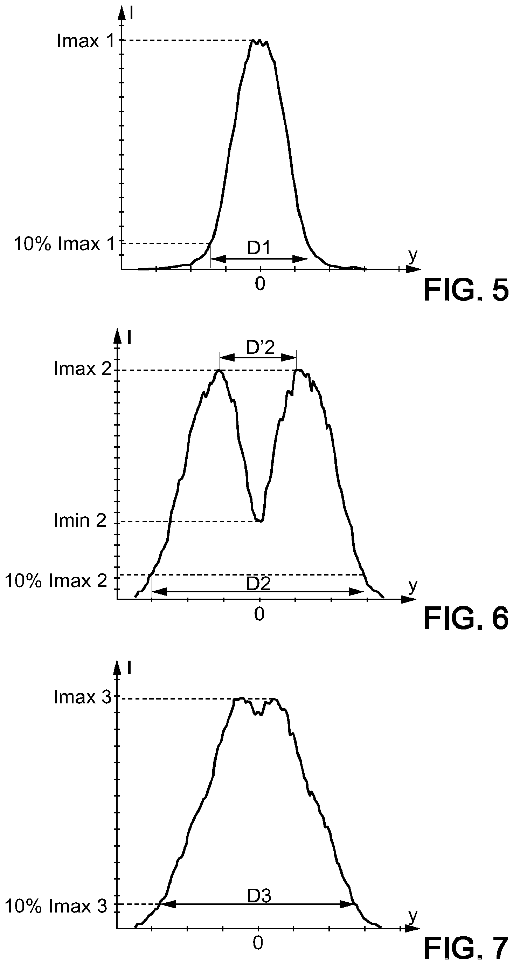

Comme illustré à la figure 5, la première tache présente une carte d'éclairement en forme de gaussienne, c'est-à-dire suivant une loi de distribution normale, centrée sur l'axe X1 du premier faisceau (position Y=0).

Comme illustré à la figure 6, la seconde tache présente également une carte d'éclairement en forme de gaussienne, centrée sur l'axe X2 du second faisceau (position Y=0) et plus étalée que la carte d'éclairement de la première tache. La seconde tache présente par ailleurs une zone d'ombre, c'est-à-dire une zone de réduction de l'intensité lumineuse I, au centre. Cette réduction de l'intensité lumineuse I est progressive et passe par un minimum local Imin2 au centre de la tache (Y=0).

On définit le diamètre D1, D2 de la tache comme étant le diamètre de la zone pour laquelle l'intensité lumineuse I en périphérie de la tache est supérieur ou égal à 10 pourcents de l'intensité maximale Imax1, Imax2 de la tache correspondante (noté 10% Imax1 et 10% Imax2).

On définit par diamètre de la zone d'ombre D'2 le diamètre de la zone centrale de la tache pour laquelle l'intensité lumineuse I est réduite. Le diamètre de la zone d'ombre D'2 est ainsi définie comme la distance entre deux maximums locaux Imax2 ou sommets de la carte d'éclairement, situés de part et d'autre de la zone centrale de la carte d'éclairement. Ladite zone centrale est la zone proche de la position de l'axe X2 du faisceau (Y=0).

Le centre de la première tache coïncide de préférence avec le centre de la seconde tache. Entre d'autres termes, le point focal du premier faisceau lumineux peut coïncider avec le point focal du deuxième faisceau lumineux, de façon à obtenir un effet scialytique.

La figure 7 illustre la carte d'éclairement de la superposition des première et seconde taches. On constate qu'une telle superposition est quasiment similaire à une gaussienne, plus étalée et présentant une intensité maximale plus importante que la gaussienne de la figure 5.

En effet, dans un tel cas, la tache obtenue lors d'une telle superposition présente un diamètre D3 supérieur aux diamètres D1 et D2. L'intensité maximale Imax3 de la tache obtenue est également supérieure aux intensités Imax1 et Imax2.Il est ainsi possible de faire varier la forme et la dimension de la tache lumineuse générée par la tête d'éclairage, soit en allumant ou en éteignant les premières et deuxième sources lumineuses, associées respectivement aux premiers et deuxièmes collimateurs, soit en modulant l'intensité lumineuse des premiers et second faisceaux lumineux issus respectivement des premier et deuxième collimateurs. L'allumage simultané des premières et deuxièmes sources lumineuses (figure 7) permet d'obtenir une tache lumineuse pleine de grande dimension tandis que l'allumage des premières sources lumineuses seulement (figure 5) permet d'obtenir une tache lumineuse pleine de plus faible dimension, par exemple.

Il est également possible de faire varier le nombre de modules d'éclairage 7 utilisés, en fonction des modes de fonctionnement.

## Revendications

1. Dispositif d'éclairage (1) comportant :
- une première source lumineuse associée à un premier collimateur (9), aptes à générer un premier faisceau lumineux formant une première tache lumineuse pleine circulaire à une distance focale déterminée,
- une deuxième source lumineuse associée à un deuxième collimateur (10), aptes à générer un deuxième faisceau lumineux formant une deuxième tache lumineuse annulaire à ladite distance focale, la deuxième tache comportant une zone d'ombre centrale, la première tache lumineuse étant située dans ladite zone d'ombre de la seconde tache,
- des moyens de commande de la première source lumineuse et/ou de la deuxième source lumineuse.

2. Dispositif d'éclairage (1) selon la revendication précédente, dans lequel la première tache présente un premier diamètre (D1), la deuxième tache présente un deuxième diamètre (D2) et la zone d'ombre présente un troisième diamètre (D'2), le deuxième diamètre (D2) étant supérieur au premier diamètre (D1), le premier diamètre (D1) étant au moins égal au troisième diamètre (D'2) et inférieur au deuxième diamètre (D2).

3. Dispositif d'éclairage (1) selon l'une des revendications précédentes, dans lequel chaque collimateur (9, 10) comporte une partie principale (13) de forme générale conique comportant un évidement (14) central s'étendant selon l'axe de la partie principale (13), ledit évidement (14) comportant une extrémité d'entrée (14a) située en regard de la source lumineuse correspondant et une extrémité de sortie (14b) opposée, la partie principale (13) conique s'élargissant de l'extrémité d'entrée (14a) vers l'extrémité de sortie (14b), une lentille (15) étant formée dans ledit évidement (14).

4. Dispositif d'éclairage (1) selon la revendication précédente, dans lequel ladite lentille (15) comporte une face d'entrée (16), tournée vers l'extrémité d'entrée (14a), et une face de sortie (17), tournée vers l'extrémité de sortie (14b), la face d'entrée (16) et/ou la face de sortie (17) étant formée par une surface de révolution balayée par la rotation d'une courbe autour de l'axe (X1, X2) de la partie principale (13), ladite courbe étant convexe et comportant une première extrémité (16a, 17a), radialement interne, et une seconde extrémité (16b, 17b), radialement externe.

5. Dispositif d'éclairage (1) selon la revendication 3 ou 4, dans lequel la lentille (15) est réalisée de façon monobloc avec la partie principale (13) du collimateur (9, 10) correspondant.

6. Dispositif d'éclairage (1) selon l'une des revendications précédentes, comportant au moins un groupe de premier collimateurs (9) associés à des premières sources lumineuses et au moins un groupe de deuxièmes collimateurs (10) associés à des secondes sources lumineuses.

7. Dispositif d'éclairage (1) selon l'une des revendications précédentes, comportant un corps (4) comportant une paroi de fond (5) concave et un rebord (6) délimitant un volume interne, les collimateurs (9) et les sources lumineuses étant montés sur la paroi de fond (5) du corps (4).
